Europäisches Patentamt

European Patent Office

Office européen des brevets

(11) Veröffentlichungsnummer: **0 025 101**
**B1**

(12) # EUROPÄISCHE PATENTSCHRIFT

(45) Veröffentlichungstag der Patentschrift:
19.01.83

(51) Int. Cl.³: **B 60 T 8/26**

(21) Anmeldenummer: **80104150.0**

(22) Anmeldetag: **16.07.80**

(54) Bremskraftregler für ein hydraulisches Motorrad-Bremssystem.

(30) Priorität: **22.08.79 DE 2933878**

(43) Veröffentlichungstag der Anmeldung:
**18.03.81 Patentblatt 81/11**

(45) Bekanntmachung des Hinweises auf die Patenterteilung:
**19.01.83 Patentblatt 83/3**

(84) Benannte Vertragsstaaten:
**AT DE FR GB IT SE**

(56) Entgegenhaltungen:
**DE-A-2 743 204**
**DE-A-2 847 571**
**DE-A-2 854 970**

(73) Patentinhaber: **ALFRED TEVES GmbH,
Guerickestrasse 7 Postfach 90 01 20, D-6000 Frankfurt
am Main (DE)**

(72) Erfinder: **Berisch, Volker, Albanstrasse 35,
D-6234 Hattersheim 1 (DE)**
Erfinder: **Riedel, Peter, Schulstrasse 41,
D-6234 Hattersheim (DE)**

(74) Vertreter: **Frigger, Heinz, Dipl.-Ing., c/o Alfred Teves
GmbH Guerickestrasse 7 Postfach 900120,
D-6000 Frankfurt/Main 90 (DE)**

Bremskraftregler für ein hydraulisches Motorrad-Bremssystem

Die Erfindung bezieht sich auf einen Bremskraftregler für ein hydraulisches Motorrad-Bremssystem, bei dem von einem Fußhauptzylinder eine Hinterradbremse und eine erste Vorderradbremse und mittels eines Handhauptzylinders eine zweite Vorderradbremse druckbeaufschlagbar sind und bei dem die Druckbeaufschlagung der Hinterradbremse in Abhängigkeit vom mit dem Handhauptzylinder erzeugten Druck minderbar ist und der Bremskraftregler einen gegen die Kraft einer Rückstellfeder verschiebbaren Stufenkolben hat, dessen größere Wirkfläche eine Druckeinlaßkammer begrenzt und vom Fußhauptzylinder druckbeaufschlagbar ist und dessen kleinere Wirkfläche eine Druckauslaßkammer begrenzt und vom Druck in der Hinterradbremse druckbeaufschlagbar ist, und mit einem ersten Ventil, durch das eine Druckmittelverbindung zwischen der Druckeinlaßkammer und der Druckauslaßkammer verschließbar ist und einem zweiten Ventil, welches von dem im Handhauptzylinder erzeugten Druck in eine eine Druckmittelverbindung zwischen der ersten Vorderradbremse und dem Fußhauptzylinder unterbrechende Schließstellung belastbar ist.

Aus der DE-A-2 743 204 ist bereits ein Bremskraftregler bekannt, der so konstruiert ist, daß bei Betätigung der Fußbremse das Hinterrad gegenüber dem Vorderrad überbremst wird. Durch anschließende Betätigung der Handbremse wird eine zweite Vorderradbremse beaufschlagt und gleichzeitig der Bremsdruck der Hinterradbremse abgesenkt.

Diese Funktionsweise der Bremskraftregler hat sich für Motorräder als vorteilhaft erwiesen und es kann mit diesen Reglern eine große Annäherung an die größtmögliche Verzögerung des Motorrades erreicht werden. Dies trifft uneingeschränkt nur für die beschriebene Betätigungsreihenfolge zu. Wird dagegen zuerst der Handhauptzylinder betätigt, so wird nur eine Vorderradbremse mit Druck beaufschlagt, die andere Vorderradbremse und die Hinterradbremse bleiben davon unberührt. Das alleinige Abbremsen des Vorerrades kann nicht zu einer großen Fahrzeugverzögerung führen. Wird zu der bereits betätigten Handbremse zusätzlich noch die Fußbremse betätigt, so werden auch die andere Vorderradbremse und die Hinterradbremse mit Druck beaufschlagt. Eine ausreichende Wirkung der Hinterradbremse kann jedoch nur erreicht werden, wenn der vom Handhauptzylinder erzeugte Druck bei Hinzunahme der Fußbremse gering ist, sonst besteht die Gefahr, daß das Vorderrad blockiert, weiterhin. Es wird zwar davon ausgegangen, daß der Fahrer normalerweise zuerst den Fußhauptzylinder betätigt und im Bedarfsfall später zusätzlich die Handbremse betätigt, die umgekehrte Betätigungsreihenfolge ist jedoch möglich und dürfte insbesondere dann vorkommen, wenn der Fahrer anfänglich nur eine geringe Abbremsung mit Hilfe der Handbremse für erforderlich hält und später aus irgendeinem Grund eine größere Verzögerung und damit der Einsatz der Fußbremse notwendig wird. Auch bei Panikbremsungen ist diese Betätigungsreihenfolge denkbar.

Durch den Gegenstand der nicht zum Stand der Technik gehörenden, am 24. 7. 80 veröffentlichten DE-A-2 854 970 wurde bereits ein Bremskraftregler der eingangs beschriebenen Gattung geschaffen, bei dem unabhängig von der Betätigungsreihenfolge der beiden Hauptzylinder und unabhängig vom jeweils herrschenden Druck des einen Bremskreises bei Beginn der Betätigung des anderen Bremskreises eine große Fahrzeugverzögerung erreicht wird. Dieser Regler ist jedoch hinsichtlich seiner Konstruktion aufwendig und daher teuer in der Herstellung. Ferner ist aufgrund der vielen ineinander geschachtelten Teile ein Achsenversatz der einzelnen Kolben nicht ausgeschlossen, was zur Funktionsunfähigkeit des Reglers führen kann.

Es ist daher die Aufgabe der Erfindung, einen Bremskraftregler der eingangs genannten Gattung zu schaffen, der einfach im Aufbau, billig in der Herstellung und sicher in der Wirkungsweise ist.

Diese Aufgabe wird bei einem Bremskraftregler der eingangs genannten Gattung dadurch gelöst, daß für beide Ventile ein gemeinsames Ventilschließglied mit zwei gegensinnig angeordneten Dichtelementen vorgesehen ist und das zweite Ventil in Schließrichtung durch eine Spannvorrichtung vorgespannt ist.

Die wesentlichen Vorteile des erfindungsgemäßen Bremskraftreglers sind darin zu sehen, daß auch bei einer Betätigungsreihenfolge, bei der zuerst der Handhauptzylinder und später der Fußhauptzylinder bedient wird, eine weitere Annäherung an die größtmögliche Fahrzeugverzögerung möglich ist, und daß eine erhebliche Verbilligung des Produktes durch einfach herstellbare und leicht montierbare Teile erreicht wird. Eine vorteilhafte Weiterbildung des Erfindungsgegenstandes besteht darin, daß das Ventilschließglied an einen Kolben befestigt ist, der mit einem vom Druck des Handhauptzylinders beaufschlagten Steuerkolben in Wechselwirkung steht. Diese Anordnung der mechanischen Betätigung des zweiten Ventils benötigt keine zusätzlichen Druckmittelleitungen innerhalb oder außerhalb des Reglergehäuses. Vorzugsweise ist das zweite Ventil als Druckminderventil ausgebildet, dessen Druckminderwirkung bei Erreichen eines bestimmbaren Druckniveaus aufhebbar ist.

Eine derartige Anordnung hat den Vorteil, daß in der Anfangsphase des Bremsvorganges eine stärkere Überbremsung des Hinterrades und während des gesamten Bremsvorganges eine weitere Annäherung an die größtmögliche Verzögerung des Motorrades erreicht wird.

Eine besonders einfache Ausgestaltung des Druckminderventils besteht darin, daß es ein kegeliges Ende des Ventilschließgliedes und einen zweiten Stufenkolben mit einer zentralen Bohrung, deren dem Ventilschließglied benachbartes Ende als Ventilsitz ausgebildet ist, umfaßt. Um beim Lösen der Bremse den Abbau eines Restdruckes sicherzustellen, ist es zweckmäßig, daß der zweite Stufenkolben eine achsparallele zweite Bohrung geringeren Durchmessers aufweist und in der Bohrung ein Faltterventil angeordnet ist. Zur Vermeidung von Druckstößen ist es zweckmäßig, daß parallel zu dem zweiten Ventil eine Drossel geschaltet ist. Um stets eine möglichst hohe Bremskraft zu erzeugen, ist es von Vorteil, daß die Ventile derart angeordnet sind, daß im geschlossenen Zustand des ersten Ventils das zweite Ventil geöffnet ist.

Zwei Ausführungsbeispiele des erfindungsgemäßen Bremskraftreglers für ein Motorrad-Bremssystem sind nachstehend anhand der Zeichnung näher erläutert. In der Zeichnung zeigt

Fig. 1 ein Motorrad-Bremssystem mit Bremskraftregler,

Fig. 2 einen Schnitt nach der Linie II-II in Fig. 1,

Fig. 3 einen Längsschnitt durch eine zweite Ausführungsform des Bremskraftreglers,

Fig. 4 ein Diagramm mit Bremsdruckverteilungskurven für den Bremskraftregler gemäß Fig. 1,

Fig. 5 ein Diagramm mit Bremsdruckverteilungskurven für den Bremskraftregler gemäß Fig. 3.

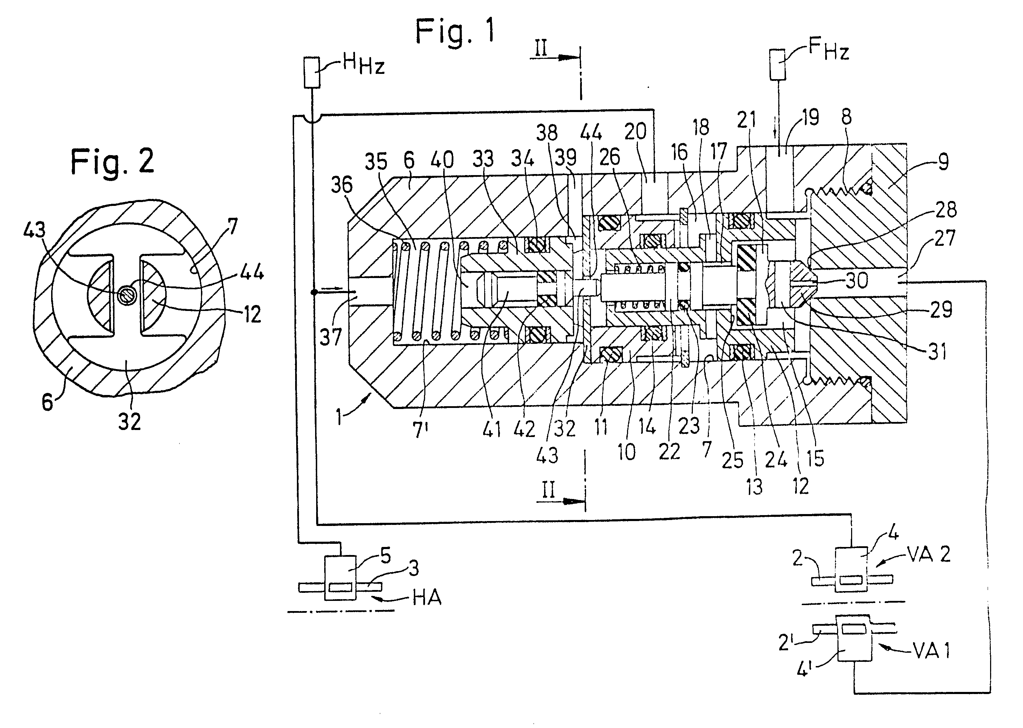

In Fig. 1 ist ein Motorrad-Bremssystem dargestellt, das aus einem Handhauptzylinder $H_{Hz}$, einem Fußhauptzylinder $F_{Hz}$, einer ersten und einer zweiten Vorderradbremse VA1, VA2 und einer Hinterradbremse HA und einem Bremskraftregler 1 besteht. Die Vorderradbremse VA1, VA2 und die Hinterradbremse HA sind Scheibenbremsen mit je einer Bremsscheibe 2, 2', 3 und einem Bremssattel 4, 4', 5. Der Bremskraftregler 1 besteht aus einem Gehäuse 6 mit einer abgestuften Sackbohrung 7, 7', welche an ihrem offenen Ende ein Gewinde 8 aufweist und mittels einer Schraube 9 verschlossen ist. In dem Bohrungsabschnitt 7 ist anschließend an den Bohrungsabschnitt 7' eine erste Hülse 10 angeordnet und mittels einer Dichtung 11 gegen das Gehäuse 6 abgedichtet. Ein erster Stufenkolben 12 befindet sich mit seiner größeren Kolbenstufe in der Bohrung 7, und zwar auf der zur Schraube 9 gewandten Seite der Hülse 10 und seine kleinere Kolbenstufe durchdringt die Hülse 10. Der Stufenkolben 12 ist mittels einer Dichtung 13 gegen das Gehäuse 6 und mittels einer Dichtung 14 gegen die Hülse 10 abgedichtet.

Der Stufenkolben 12 begrenzt mit seiner größeren Kolbenstufe eine Druckeinlaßkammer 15 und mit einer Ringfläche eine Druckauslaßkammer 16. Die Kammern 15 und 16 sind durch einen axialen Druckmitteldurchlaß 17 und eine radiale Bohrung 18 miteinander verbunden. In dem Gehäuse 6 ist ein in die Druckeinlaßkammer 15 mündender Druckmittelanschluß 19 und ein in die Druckauslaßkammer 16 mündender Druckmittelanschluß 20 vorgesehen, wobei der Druckmittelanschluß 19 mit dem Fußhauptzylinder $F_{Hz}$ und der Druckmittelanschluß 20 mit dem Bremssattel 5 der Hinterradbremse HA verbunden ist.

In dem axialen Druckmitteldurchlaß 17 des Stufenkolbens 12 ist ein mit einem Ventilschließglied 21 versehener Kolben 22 geführt und durch eine Dichtung 23 gegen den Stufenkolben 12 abgedichtet. Das Ventilschließglied 21 weist einen Dichtungsring 24 mit einer radialen Dichtfläche auf, die einer als Ventilsitz 25 dienenden radialen Fläche des Stufenkolbens 12 gegenüberliegt. Der Kolben 22 ist durch eine Feder 26 mit geringer Federkraft in Ventilöffnungsrichtung vorgespannt, wobei das Ventilschließglied 21 an der Schraube 9 anliegt.

In der Schraube 9 ist ein in die Druckeinlaßkammer 15 mündender Druckmittelanschluß 27 vorgesehen, der mit dem Bremssattel 4' der ersten Vorderradbremse VA1 verbunden ist. Das dem Ventilschließglied 21 zugewandte Ende des Druckmittelanschlusses 27 ist als Ventilsitz 28 ausgebildet, der einem kegeligen Ende 29 des Ventilschließgliedes 21 gegenüberliegt. In dem kegeligen Ende 29 befindet sich eine axial angeordnete Drosselbohrung 30, die in den Druckmittelanschluß 27 mündet und durch eine Querbohrung 31 mit der Druckeinlaßkammer 15 verbunden ist.

Zwischen der Hülse 10 und der Stufe der Bohrung 7, 7' ist ein Querglied 32 eingespannt, welches das geschlitzte Ende der kleineren Kolbenstufe des Stufenkolbens 12 durchdringt. Der Stufenkolben 12 ist an der Stirnseite eines Druckkolbens 33 abgestützt, der mittels einer Dichtung 34 gegen das Gehäuse 6 abgedichtet ist und mit der anderen Stirnseite einen Druckraum 35 begrenzt. In dem Druckraum 35 ist eine Rückstellfeder 36 angeordnet, die den Druckkolben 33 in Richtung auf den Stufenkolben 12 und diesen gegen die Schraube 9 belastet. Der Druckraum 35 ist mit einem Druckmittelanschluß 37 versehen, der mit dem Handhauptzylinder $H_{Hz}$ verbunden ist. Zwischen dem Druckkolben 32 und der Hülse 10 wird ein Hohlraum 38 gebildet, der durch eine Öffnung 39 im Gehäuse 6 mit der Atmosphäre verbunden ist.

Der Druckkolben 33 weist eine koaxiale Bohrung 40 auf, in der ein vom Druck in dem Druckraum 35 beaufschlagter Steuerkolben 41 angeordnet und mittels einer Dichtung 42 gegen die Bohrungswandung abgedichtet ist. Auf der dem Stufenkolben 12 zugewandten Seite des Steuerkolbens 41 ist ein verjüngtes Ende 43 angeordnet, das durch eine Öffnung 44 des Quergliedes 32 ragt und an der Stirnseite des Kolbens 22 anliegt. Der Kolben 22 und der Steuerkolben 41 stehen somit in Wechselwirkung.

In Fig. 2 ist der Schnitt nach der Linie II-II in Fig. 1 gezeigt. In dem Gehäuse 6 mit der Bohrung 7 ist das Querglied 32 angeordnet, welches das geschlitzte Ende des Stufenkolbens 12 durchdringt. In der Öffnung 44 des Quergliedes 32 befindet sich das verjüngte Ende 43 des Steuerkolbens 41.

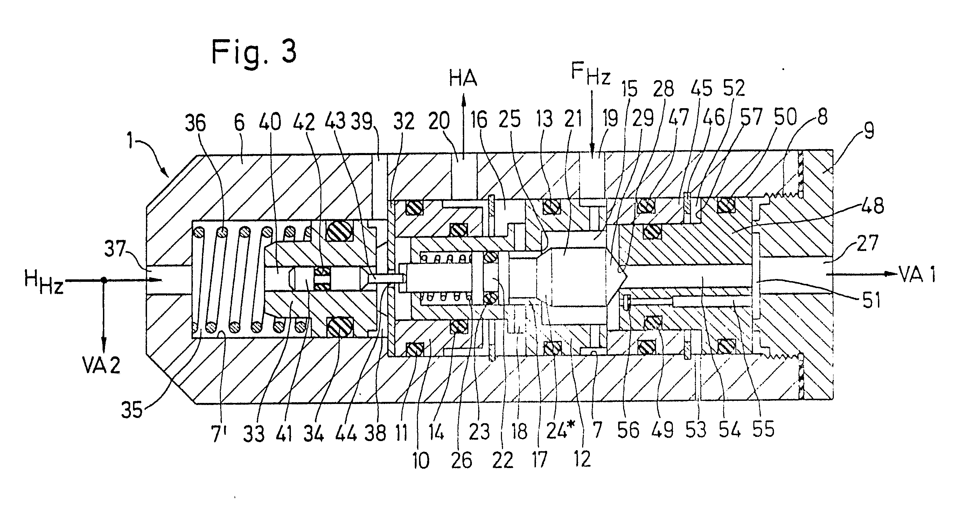

Der in Fig. 3 dargestellte Bremskraftregler entspricht in wesentlichen Teilen demjenigen in Fig. 1, es wird daher, um Wiederholungen zu vermeiden, nur auf die Unterschiede zu der vorstehend beschriebenen Anordnung eingegangen. Für gleiche Teile wurden die Bezugszeichen aus Fig. 1 übernommen.

Das Gehäuse 6 ist in dem Teil zwischen der Einlaßkammer 15 und der Schraube 9 verlängert. In diesem Teil der Bohrung 7 ist eine Hülse 45 eingesetzt, die auf ihrer zu Schraube 9 gewandten Seite gegen einen gehäusefesten Ring 46 liegt und auf ihrer anderen Seite als Anschlag des Stufenkolbens 12 dient. Die Hülse 45 ist mittels einer Dichtung 47 gegen das Gehäuse 6 abgedichtet. Ein zweiter Stufenkolben 48 ist mit seiner kleineren Stufe in der Hülse 45 und mit seiner größeren Stufe in die Bohrung 7 geführt und mittels Dichtungen 49 und 50 abgedichtet. Die Stirnseite der kleineren Kolbenstufe begrenzt die Einlaßkammer 15 und die Stirnseite der größeren Kolbenstufe begrenzt eine zweite Druckauslaßkammer 51. Zwischen der kleineren Stufe des zweiten Stufenkolbens 48 und dem Gehäuse 6 ist ein Ringraum 52 vorhanden, der durch eine radiale Öffnung 53 mit der Atmosphäre verbunden ist. Eine koaxiale Bohrung 54 in dem zweiten Stufenkolben 48 verbindet die Kammern 15 und 51. Das dem ersten Stufenkolben 12 zugewandte Ende der Bohrung 54 dient als Ventilsitz 28 des kegeligen Endes 29 des Verschließgliedes 21. Im zweiten Stufenkolben 48 ist eine achsparallele Bohrung 55 geringeren Durchmessers mit einem Flatterventil 56 vorgesehen. Der zweite Stufenkolben 48 ist mit einem Anschlag 57 versehen, der den Verschiebeweg des Stufenkolbens 48 in Richtung auf die Einlaßkammer 15 begrenzt. Anstelle des Dichtringes 24 ist an dem Ventilschließglied 21 eine kegelige Fläche 24 vorgesehen.

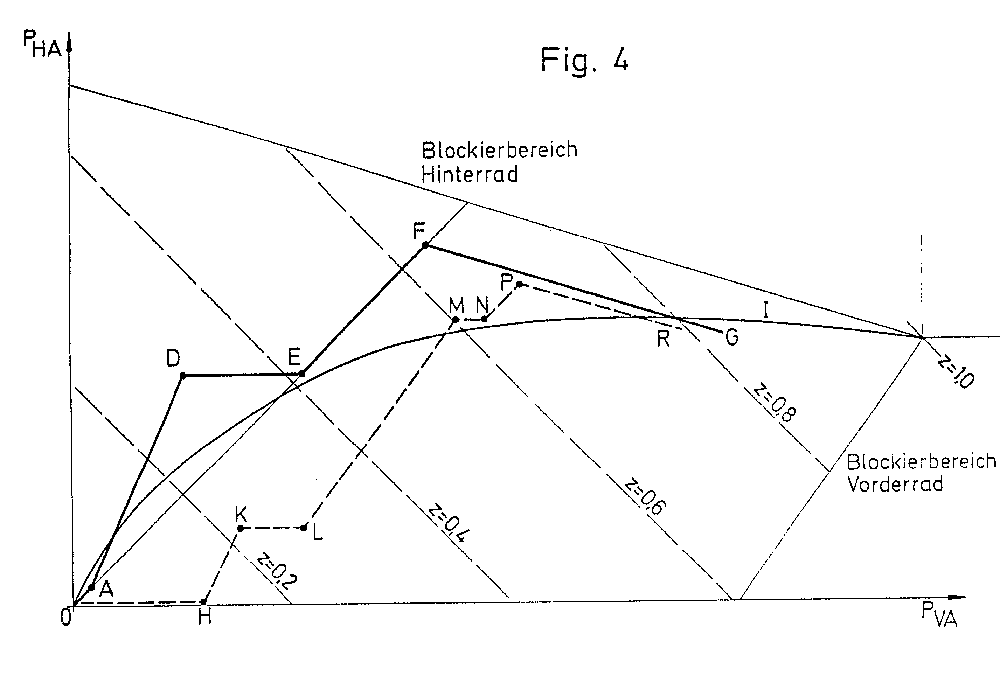

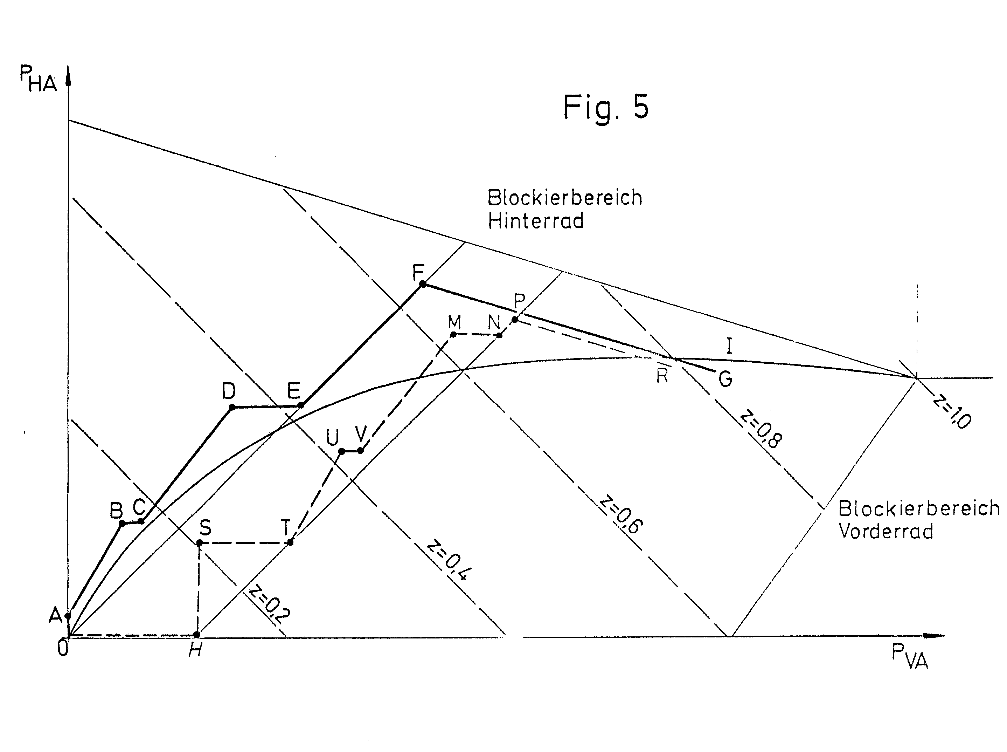

In den Fig. 4 und 5 sind jeweils Diagramme mit Bremsdruckverteilungskurven gezeigt, wobei der Bremsdruck der Hinterachse in Abhängigkeit von dem Gesamtbremsdruck der Vorderachse aufgetragen ist. Die Kurve I entspricht der idealen Bremsdruckverteilung bei einem bestimmten Beladungszustand des Motorrades. Mit Z ist jeweils die Verzögerung angegeben. Der Verlauf der Bremsdruckverteilungskurven wird bei der Funktionsbeschreibung erläutert. Die Funktionsweise der in den Fig. 1 und 3 dargestellten Bremskraftregler ist abhängig von der Betätigungsreihenfolge der Hauptzylinder und davon, in welchem Moment des Bremsvorganges der jeweilige Hauptzylinder betätigt wird. Diese Variationsmöglichkeiten ergeben ein großes Spektrum von Bremsdruckverteilungskennlinien, von denen lediglich zwei Beispiele beschrieben sind. Die Bremsdruckverteilungskurven entsprechen prinzipiell den beschriebenen Bremskraftreglern, sie sind jedoch nicht exakt im Hinblick auf die angegebenen Flächenverhältnisse. Dies ist deshalb nicht erforderlich, weil die Flächenverhältnisse frei wählbar sind.

Bei der Funktionsbeschreibung des in Fig. 1 dargestellten Motorrad-Bremssystems sei zunächst der Fall angenommen, daß anfangs allein der Fußhauptzylinder $F_{Hz}$ und erst später der Handhauptzylinder $H_{Hz}$ betätigt wird. Zu Beginn des Bremsvorganges befinden sich alle Teile des Bremskraftreglers in der in Fig. 1 gezeigten Ruhestellung. Bei Betätigung des Fußhauptzylinders $F_{Hz}$ wird in der Druckeinlaßkammer 15 ein Druck aufgebaut, der sich einerseits durch den geöffneten Druckmitteldurchlaß 17 und die Radialbohrung 18 in die Druckauslaßkammer 16 und weiter zu der Hinterradbremse HA fortsetzt und andererseits durch die Querbohrung 31 und die Drosselbohrung 30 gemindert an die Vorderradbremse VA1 weitergegeben wird.

Auf das Ventilschließglied 21 wirkt aufgrund unterschiedlicher druckbeaufschlagter Flächen eine Kraftdifferenz, die den Kolben 22 gegen die Feder 26 bewegt. Dadurch wird das kegelige Ende 29 von dem Ventilsitz 28 abgehoben und ein Druckausgleich zwischen der Einlaßkammer 15 und dem Druckmittelanschluß 27 erfolgt. Gleichzeitig wird durch die Bewegung des Kolbens 22 der Dichtungsring 24 an den Ventilsitz 25 gelegt und somit der Druckmitteldurchlaß 17 verschlossen. Da die Feder 26 nur eine geringe Federkraft hat, erfolgt die Bewegung des Kolbens 22 bereits bei niedrigem Druck. Dies ist in der Kennlinie der Punkt A. Zwar entspricht der exakte Verlauf der Kennlinie zwischen den Punkten O und A nicht der in der Zeichnung enthaltenen Darstellung, aus Gründen der Übersichtlichkeit wurde jedoch auf die Darstellung der geringfügigen Abweichungen verzichtet.

Bei Steigerung des Druckes in der Druckeinlaßkammer 15 durch weitere Betätigung des Fußhauptzylinders $F_{Hz}$ werden der Stufenkolben 12 — unter Mitnahme des Kolbens 22 — und der Druckkolben 33 gegen die Rückstellfeder 38 verschoben. Dadurch wird in der Druckauslaßkammer 16 ein Druck erzeugt, der gegenüber dem in der Druckeinlaßkammer 15 herrschenden Druck verstärkt ist, das heißt, in der Hinterradbremse HA herrscht nun ein größerer Bremsdruck als in der Vorderradbremse VA1. Die Druckverstärkung in der Hinterradbremse HA erfolgt so lange, bis der Kolben 22 an das Querglied 32 gelangt und von diesem an einer weiteren Verschiebung gehindert wird. Damit ist Punkt D der Kennlinie erreicht.

Durch das Abstützen des Kolbens 22 an dem Querglied 32 verringert sich die vom Druck in der Druckeinlaßkammer 15 beaufschlagte Gesamtfläche der Kolbeneinheit auf die Stirnfläche des Stufenkolbens 12. Der Druck in der Druckeinlaßkammer 15 wird so weit gesteigert, bis die auf den Stufenkolben 12 wirkenden Druckkräfte gleich sind. Nun wird das Ventilschließglied 21 von dem Ventilsitz 25 abgehoben und es erfolgt, sofern in den Kammern 15 und 16 unterschiedliche Drücke herrschen, ein Druckausgleich, das heißt, beide Bremsen HA und VA1 werden mit gleichem Bremsdruck beaufschlagt. Dieser Punkt ist in der Kennlinie mit E bezeichnet.

Bei weiterer Betätigung des Fußhauptzylinders steigt in der Vorderradbremse VA1 und in der Hinterradbremse HA der Druck gleichmäßig an. Durch die dynamische Achslastverlagerung beim Bremsvorgang wird das Hinterrad entlastet, wodurch es zum Blockieren tendiert. Um ein Blockieren des Hinterrades zu vermeiden, wird zusätzlich der Handhauptzylinder $H_{Hz}$ betätigt. Der Beginn der Handhauptzylinderbetätigung ist der Punkt F der Kennlinie.

Durch den Handhauptzylinder $H_{Hz}$ wird in dem Druckraum 35 ein Druck aufgebaut, der auf den Druckkolben 33 wirkt und diesen in Richtung auf den Stufenkolben 12 verschiebt. Da der Stufenkolben 12 mit dem Druckkolben 33 in Wechselwirkung steht, wird auch er in gleicher Weise verschoben. Es erfolgt nun lediglich eine Erhöhung des Bremsdruckes in der vom Handhauptzylinder $H_{Hz}$ beaufschlagten Vorderradbremse VA2. Voraussetzung hierfür ist jedoch, daß der Fußhauptzylinder $F_{Hz}$ nicht weiter betätigt, sondern nur gehalten wird. Diese Druckerhöhung in der Druckkammer 35 bewirkt, daß der Stufenkolben 12 bei gleichzeitigem Schließen des Druckmitteldurchlasses 17 verschoben und dadurch das Volumen der Druckeinlaßkammer 15 verringert und das Volumen der Druckauslaßkammer 16 vergrößert wird. Es erfolgt nunmehr eine zusätzliche Druckerhöhung in der Vorderradbremse VA1 aufgrund der Volumenverringerung der Kammer 15 und eine Druckminderung in der Hinterradbremse HA aufgrund der Volumenvergrößerung in der Kammer 16. Dadurch ergibt sich der Verlauf der Kennlinie von F nach G.

Nun wird der Fall, daß zuerst der Handhauptzylinder $H_{Hz}$ und danach der Fußhauptzylinder $F_{Hz}$ betätigt wird, beschrieben. Zu Beginn des Bremsvorganges befindet sich der Bremskraftregler in der in Fig. 1 gezeigten Ruhestellung. Bei Betätigung des Handhauptzylinders $H_{Hz}$ wird in dem Druckraum 35 und in der Vorderradbremse VA2 ein Druck aufgebaut. Das Motorrad wird daher zunächst nur an dem Vorderrad gebremst. Dies zeigt der Verlauf der gestrichelten Kennlinie zwischen den Punkten O und H.

Mit H ist der Punkt angenommen, in welchem der Fahrer die Stellung des Handhauptzylinders beibehält und zusätzlich den Fußhauptzylinder $F_{Hz}$ betätigt. Durch den Fußhauptzylinder wird in der Druckeinlaßkammer 15 ein Druck aufgebaut, der sich durch den geöffneten Druckmitteldurchlaß 17 in die Druckauslaßkammer 16 und weiter zu der Hinterradbremse HA fortsetzt. Aufgrund der Druckbeaufschlagung des Kolbens 41 durch den im Druckraum 35 herrschenden Druck wird das kegelige Ende 29 auf seinem Ventilsitz 28 gehalten. Der in der Druckeinlaßkammer 15 herrschende Druck wird daher durch die Querbohrung 31 und die Drosselbohrung 30 gemindert der Vorderradbremse VA1 zugeführt. Dadurch wird ein Verlauf der Kennlinie vom Punkt H zum Punkt K erreicht.

Auf das Ventilschließglied 22 wirkt aufgrund unterschiedlicher druckbeaufschlagter Flächen eine Kraftdifferenz, die den Kolben 22 gegen die Feder 26 bewegt. Dadurch legt sich der Dichtungsring 24 an den Ventilsitz 25 und verschließt den Druckmitteldurchlaß 17 bei gleichzeitigem Öffnen des zweiten Ventils 28, 29. Dieser Vorgang wird bei einem höheren Druckniveau erreicht als beim vorher beschriebenen Punkt A, da der auf den Steuerkolben 41 wirkende Druck des Handhauptzylinders $H_{Hz}$ den Umschaltpunkt beeinflußt. Dies ist in der Kennlinie der Punkt K.

Bei weiterer Druckerhöhung in der Druckeinlaßkammer 15 bleibt der Druck in der Hinterradbremse konstant, bis die durch den Handhauptzylinder $H_{Hz}$ erzeugte Kraftwirkung auf den Druckkolben 22 ausgeglichen ist. Dieser Punkt ist in der Kennlinie mit L bezeichnet.

Bei Steigerung des Druckes in der Druckeinlaßkammer 15 durch weitere Betätigung des Fußhauptzylinders $F_{Hz}$ werden der Stufenkolben 12 — unter Mitnahme des Kolbens 22 — und der Druckkolben 33 gegen die Rückstellfeder 36 verschoben. Aufgrund der Verschiebung des Druckkolbens 33 wird das Volumen des Druckraumes 35 verringert und somit der darin herrschende Druck verstärkt. Die Verschiebung des Stufenkolbens 12 bewirkt gleichzeitig eine Druckverstärkung in der Druckauslaßkammer 16 gegenüber dem in der Druckeinlaßkammer 15 herrschenden Druck. Sofern bei der Betätigung des Fußhauptzylinders $F_{Hz}$ der Handhauptzylinder $H_{Hz}$ in seiner bei Punkt H erreichten Stellung gelassen wird, ergibt sich nach dem Schließen des Ventils 24, 25 ein Druckaufbau in den Vorderrad- und Hinterradbremsen, der dem Verlauf der Kennlinie zwischen den Punkten L und M entspricht. Die Druckverstärkung in der Hinterradbremse HA erfolgt so lange, bis der Kolben 22 an das Querglied 32 gelangt und von diesem an einer weiteren Verschiebung gehindert wird. Damit ist Punkt M der Kennlinie erreicht.

Durch das Abstützen des Kolbens 22 an dem Querglied 32, verringert sich die vom Druck in der Druckeinlaßkammer 15 beaufschlagte Gesamtfläche der Kolbeneinheit auf die Stirnfläche des Stufenkolbens 12. Der Druck in der Druckeinlaßkammer 15 wird so weit gesteigert, bis die auf den Stufenkolben 12 wirkenden Druckkräfte gleich sind. Nun wird das Ventilschließglied 21 von dem Ventilsitz 25 abgehoben und es erfolgt, sofern in den Kammern 15 und 16 unterschiedliche Drücke herrschen, ein Druckausgleich, das heißt, beide Bremsen HA und VA1 werden mit gleichem Bremsdruck beaufschlagt. Der Bremsdruck an beiden Vorderradbremsen VA1, VA2 zusammen ist größer als der Bremsdruck an der Hinterradbremse HA. Dieser Punkt ist in der Kennlinie mit N bezeichnet. Bei weiterer Betätigung des Fußhauptzylinders $F_{Hz}$ und unveränderter Stellung des Handhauptzylinders $H_{Hz}$, steigt in der Vorderradbremse VA1 und der Hinterradbremse HA der Druck gleichmäßig an. Die Bremsdruckverteilung entspricht dann dem Verlauf der Kennlinie vom Punkt N weiterführend auf der 45°-Linie.

Sofern die Gefahr besteht, daß aufgrund der dynamischen Achslastverlagerung beim Bremsvorgang das Hinterrad zum Blockieren tendiert, kann durch weitere Betätigung des Handhauptzylinders $H_{Hz}$ eine Absenkung des Druckes in der Hinterradbremse HA erreicht werden. Dadurch ergibt sich ein Verlauf der Kennlinie von Punkt P nach R.

Bei der Beschreibung der Funktionsweise des in Fig. 3 dargestellten Bremskraftreglers sei zunächst der Fall angenommen, daß anfangs allein der Fußhauptzylinder $F_{Hz}$ und erst später der Handhauptzylinder betätigt wird. Zu Beginn des Bremsvorganges befindet sich der Bremskraftregler in der in Fig. 3 gezeichneten Ruhestellung. Bei Betätigung des Fußhauptzylinders $F_{Hz}$ wird in der Druckeinlaßkammer 15 ein Druck aufgebaut, der sich durch den geöffneten Druckmitteldurchlaß 17 und die radiale Bohrung 18 in die erste Druckauslaßkammer 16 und weiter zu der Hinterradbremse HA fortsetzt. Das Ventil 28, 29 ist zu diesem Zeitpunkt noch geschlossen und die Vorderradbremse VA1 wird noch nicht von einem Druck beaufschlagt.

Auf den Kolben 22 wirkt aufgrund unterschiedlicher druckbeaufschlagter Flächen eine Kraftdifferenz, die den Kolben 22 gegen die Feder 26 bewegt. Dadurch legt sich das Ventilschließglied 21 mit seiner kegeligen Fläche 24 an den Ventilsitz 25 und verschließt den Druckmitteldurchlaß 17.

Da die Feder nur eine geringe Federkraft hat, schließt das Ventil bei nur niedrigem Druck. Gleichzeitig mit der Bewegung des Kolbens 22 wird das kegelige Ende 29 von dem Ventilsitz 28 abgehoben. Dies ist in der in Fig. 5 gezeigten Kennlinie der Punkt A.

Durch das Abheben des kegeligen Endes 29 vom Ventilsitz 28 kann Druckmittel durch die Bohrung 54 in die zweite Druckauslaßkammer 51 gelangen. Auf den zweiten Stufenkolben 48 wirkt nunmehr aufgrund unterschiedlicher druckbeaufschlagter Flächen eine Kraftdifferenz, die diesen in Richtung auf die Einlaßkammer 15 verschiebt und ein erneutes Schließen des Ventils 28, 29 bewirkt. Durch Drucksteigerung im Fußhauptzylinder $F_{Hz}$ wird dieser Vorgang des Öffnens und Schließens des Ventils 28, 29 mehrmals wiederholt, wodurch sich eine Druckminderung in der Vorderradbremse VA1 gegenüber dem im Fußhauptzylinder erzeugten Druck ergibt.

Bei Steigerung des Druckes in der Druckeinlaßkammer 15 durch weitere Betätigung des Fußhauptzylinders $F_{Hz}$, die den bereits beschriebenen Vorgang des wiederkehrenden Öffnens und Schließens des Ventils 28 bewirkt, werden der Stufenkolben 12 — unter Mitnahme des Kolbens 22 — und der Druckkolben 33 gegen die Rückstellfeder 36 verschoben. Dadurch wird in der Druckauslaßkammer 16 ein Druck erzeugt, der gegenüber dem in der Druckeinlaßkammer 15 herrschenden Druck verstärkt ist, das heißt, in der Hinterradbremse HA herrscht nun ein größerer Bremsdruck als in der Druckeinlaßkammer 15, wobei der Druck in der Kammer 15 wiederum größer ist als der in der Vorderradbremse VA1.

Wenn der zweite Stufenkolben 48 mit seinem Anschlag 57 den Ring 45 erreicht, wird er an einer weiteren Verschiebung gehindert. Der maximale Verschiebeweg des Kolbens 22 ist größer als der Verschiebeweg des zweiten Stufenkolbens 48, wodurch das Ventil 20, 29 endgültig öffnen kann. Damit ist Punkt B der Kennlinie erreicht.

Das endgültige Öffnen des Ventils 28, 29 hat zur Folge, daß ein Druckausgleich zwischen der Druckeinlaßkammer 15 und der zweiten Druckauslaßkammer 51 erfolgt. Dieser Druckausgleich ist in der Kennlinie durch die Strecke von B nach C dargestellt.

Bei einer weiteren eingangsseitigen Druckerhöhung wird der Druck in der Hinterradbremse HA gegenüber dem Druck in der Vorderradbremse VA1 nur noch entsprechend dem Flächenverhältnis des Stufenkolbens 12 in Verbindung mit dem Kolben 22 verstärkt. Die Druckverstärkung in der Hinterradbremse HA erfolgt so lange, bis der Kolben 22 an das Querglied 32 gelangt und von diesem an einer weiteren Verschiebung gehindert wird. Damit ist Punkt D der Kennlinie erreicht.

Durch das Abstützen des Kolbens 22 an dem Querglied 32 verringert sich die vom Druck in der Druckeinlaßkammer 15 beaufschlagte wirksame Fläche des Stufenkolbens 12. Der Druck in der Druckeinlaßkammer 15 wird so weit gesteigert, bis die auf den Stufenkolben 12 wirkenden Druckkräfte gleich sind. Nun wird das Ventilschließglied 21 von dem Ventilsitz 25 abgehoben und es erfolgt, sofern in den Kammern 15 und 16 unterschiedliche Drücke herrschen, ein Druckausgleich, das heißt, beide Bremsen VA1 und HA werden mit gleichem Bremsdruck beaufschlagt. Dieser Punkt ist in der Kennlinie mit E bezeichnet.

Die weitere Funktionsweise des in Fig. 3 dargestellten Bremskraftreglers entspricht derjenigen, die bereits zu Fig. 1 beschrieben wurde. Auch der Verlauf der Kennlinie von den Punkten E über F nach G ist gleich, es wird daher auf die Beschreibung zu Fig. 4 verwiesen.

Nun wird zu dem in Fig. 3 dargestellten Bremskraftregler der Fall, daß erst der Handhauptzylinder $H_{Hz}$ und danach der Fußhauptzylinder $F_{Hz}$ betätigt wird, beschrieben. Zu Beginn des Bremsvorganges befindet sich der Bremskraftregler in der in Fig. 3 gezeigten Ruhestellung. Bei Betätigung des Handhauptzylinders $H_{Hz}$ wird in dem Druckraum 35 und in der Vorderradbremse VA2 ein Druck aufgebaut. Das Motorrad wird daher zunächst nur an dem Vorderrad abgebremst. Dies zeigt der Verlauf der gestrichelten Kennlinie zwischen den Punkten O und H.

Mit H ist der Punkt angenommen, in welchem der Fahrer die Stellung des Handhauptzylinders beibehält und zusätzlich den Fußhauptzylinder $F_{Hz}$ betätigt. Durch den Fußhauptzylinder $F_{Hz}$ wird in der Druckeinlaßkammer 15 ein Druck aufgebaut, der sich zu der Hinterradbremse HA fortsetzt. Das Ventil 28, 29 bleibt geschlossen, da der Steuerkolben 41 vom Druck im Druckraum 35 beaufschlagt wird und dieser das kegelige Ende 29 gegen den Ventilsitz 28 belastet. Somit wird durch die Betätigung des Fußhauptzylinders nur die Hinterradbremse HA beaufschlagt, was durch die Strecke der Kennlinie von H nach S dargestellt ist.

Mit S ist der Punkt angenommen, bei dem der Druck in der Einlaßkammer 15 so groß ist, daß die auf den Kolben 22 wirkende Kraft die Kraft der Feder 26 und die auf den Steuerkolben 41 wirkende Druckkraft überwindet und der Kolben 22 sich entgegen seiner Vorspannung bewegt. Dadurch öffnet sich das Ventil 28, 29 bei gleichzeitigem Schließen des Ventils 21, 25. Der Druck an der Vorderradbremse VA1 erhöht sich auf einen dem Minderungsverhältnis entsprechenden Wert.

Bei weiterer Druckerhöhung in der Druckeinlaßkammer 15 bleibt der Druck in der Hinterradbremse konstant, bis die durch den Handhauptzylinder $H_{Hz}$ erzeugte Kraftwirkung auf den Druckkolben 33 ausgeglichen ist. Gleichzeitig wird in der Vorderradbremse VA1 ein Druck aufgebaut, der entsprechend dem Minderungsverhältnis des Stufenkolbens 48 gegenüber dem im Fußhauptzylinder erzeugten Druck gemindert ist. Der Punkt, an dem sich ein Ausgleich der Kraftwirkung auf den Druckkolben 33 einstellt, ist in der Kennlinie mit T bezeichnet.

Bei Steigerung des Druckes in der Druckeinlaßkammer 15 durch weitere Betätigung des Fußhauptzylinders $F_{Hz}$ werden der erste Stufenkolben 12 — unter Mitnahme des Kolbens 22 — und der Druckkolben 33 gegen die Rückstellfeder 36 verschoben. Aufgrund der Verschiebung des Druckkolbens 33 wird das Volumen des Druckraumes 35 verringert und somit der darin herrschende Druck verstärkt. Die Verschiebung des Stufenkolbens 12 bewirkt gleichzeitig eine Druckverstärkung in der Druckauslaßkammer 16 gegenüber dem in der Druckeinlaßkammer 15 herrschenden Druck. Sofern bei der Betätigung des Fußhauptzylinders $F_{Hz}$ der Handhauptzylinder $H_{Hz}$ in seiner bei Punkt H erreichten Stellung gelassen wird, ergibt sich nach dem Schließen des Ventils 21, 25 durch die Druckverstärkung an der Hinterradbremse und die Minderungswirkung an der Vorderradbremse VA1 ein Druckaufbau in den Vorderrad- und Hinterradbremsen, der dem Verlauf der Kennlinie zwischen den Punkten T und U entspricht.

Wenn der zweite Stufenkolben 48 mit seinem Anschlag 57 den Ring 46 erreicht, wird er an einer weiteren Verschiebung gehindert. Da der Verschiebeweg des Kolbens 22 größer ist, wird im Punkt U der Kennlinie das Ventil 28, 29 endgültig geöffnet und es erfolgt ein Druckausgleich zwischen den Kammern 15 und 51, was in der Kennlinie durch die Strecke U, V angegeben ist.

Eine weitere Druckerhöhung durch den Fußhauptzylinder $F_{Hz}$ hat eine Druckverstärkung in der Hinterradbremse zur Folge. Diese Druckverstärkung erfolgt so lange, bis der Kolben 22 an das Querglied 33 gelangt und von diesem an einer weiteren Verschiebung gehindert wird. Damit ist Punkt M der Kennlinie erreicht.

Im übrigen ist die Wirkungsweise und der weitere Verlauf der Kennlinie vom Punkt M über N, P nach R identisch mit dem Bremskraftregler in Fig. 1 und der Kennlinie in Fig. 4. Um Wiederholungen zu vermeiden, wird daher auf die Beschreibung zu Fig. 4 verwiesen.

## Patentansprüche

1. Bremskraftregler (1) für ein hydraulisches Motorrad-Bremssystem, bei dem von einem Fußhauptzylinder ($F_{Hz}$) eine Hinterradbremse (HA) und eine erste Vorderradbremse (VA1) und mittels eines Handhauptzylinders ($H_{Hz}$) eine zweite Vorderradbremse (VA2) druckbeaufschlagbar sind und bei dem die Druckbeaufschlagung der Hinterradbremse (HA) in Abhängigkeit vom mit dem Hauptbremszylinder ($H_{Hz}$) erzeugten Druck minderbar ist, und der Bremskraftregler (1) einen gegen die Kraft einer Rückstellfeder (36) verschiebbaren Stufenkolben (12) hat, dessen größere Wirkfläche eine Druckeinlaßkammer (15) begrenzt und vom Fußhauptzylinder ($F_{Hz}$) druckbeaufschlagbar ist und dessen kleinere Wirkfläche eine Druckauslaßkammer (16) begrenzt und vom Druck in der Hinterradbremse (HA) druckbeaufschlagbar ist und mit einem ersten Ventil (24, 25), durch das eine Druckmittelverbindung zwischen der Druckeinlaßkammer (15) und der Druckauslaßkammer (16) verschließbar ist und einem zweiten Ventil (28, 29), welches von dem im Handhauptzylinder ($H_{Hz}$) erzeugten Druck in eine eine Druckmittelverbindung zwischen der ersten Vorderradbremse (VA1) und dem Fußhauptzylinder ($F_{Hz}$) unterbrechende Schließstellung belastbar ist, dadurch gekennzeichnet, daß für beide Ventile (24, 25; 28, 29) ein gemeinsames Ventilschließglied (21) mit zwei gegensinnig angeordneten Dichtelementen (24 bzw. 24 und 25) vorgesehen ist und das zweite Ventil (28, 29) in Schließrichtung durch eine Spannvorrichtung (26) vorgespannt ist.

2. Bremskraftregler nach Anspruch 1, dadurch gekennzeichnet, daß das Ventilschließglied (21) an einem Kolben (22) befestigt ist, der mit einem vom Druck des Handhauptzylinders ($H_{Hz}$) beaufschlagten Steuerkolben (41) in Wechselwirkung steht.

3. Bremskraftregler nach Anspruch 1 oder 2, dadurch gekennzeichnet, daß das zweite Ventil (28, 29) ein Druckminderventil ist.

4. Bremskraftregler nach Anspruch 3, dadurch gekennzeichnet, daß bei Erreichen eines bestimmten Druckniveaus die Druckminderung aufhebbar ist.

5. Bremskraftregler nach Anspruch 3 oder 4, dadurch gekennzeichnet, daß das Druckminderventil ein kegeliges Ende (29) des Ventilschließgliedes (21) und einen zweiten Stufenkolben (48) mit einer zentralen Bohrung (54), deren dem Ventilschließglied (21) benachbartes Ende als Ventilsitz ausgebildet ist, umfaßt.

6. Bremskraftregler nach Anspruch 5, dadurch gekennzeichnet, daß der zweite Stufenkolben (48) eine achsparallele zweite Bohrung (55) geringeren Durchmessers aufweist und in der Bohrung (55) ein Flatterventil (56) angeordnet ist.

7. Bremskraftregler nach Anspruch 1 oder 2, dadurch gekennzeichnet, daß eine parallel zu dem zweiten Ventil (28, 29) geschaltete Drossel (30) vorgesehen ist.

8. Bremskraftregler nach Anspruch 7, dadurch gekennzeichnet, daß die Ventile (21, 25) und (28, 29) derart angeordnet sind, daß im geschlossenen Zustand des ersten Ventils (21, 25) das zweite Ventil (28, 29) geöffnet ist.

## Claims

1. A braking force control device (1) for a motor cycle hydraulic brake system, wherein a rear wheel brake (HA) and a first front wheel brake (VA1) are adapted to be pressurized by a pedal master cylinder ($F_{Hz}$) and a second front wheel brake (VA2) is adapted to be pressurized by means of a hand master cylinder ($H_{Hz}$), and wherein the pressurization of the rear wheel brake (HA) can be reduced in dependence upon the pressure generated by means of the master brake cylinder ($H_{Hz}$), and wherein the braking force control device (1) has a stepped piston (12) slidable against the force of a return spring (36), whose larger effective surface confines a pressure inlet chamber (15) and is adapted to be pressurized by the pedal master cylinder ($F_{Hz}$) and whose smaller effective surface confines a pressure outlet chamber (16) and is adapted to be pressurized by the pressure in the rear wheel brake (HA), and said control device having a first valve (24, 25) by means of which a pressure medium connection between the pressure inlet chamber (15) and the pressure outlet chamber (16) can be closed, and a second valve (28, 29) which is loadable by the pressure generated in the hand master cylinder ($H_{Hz}$) to assume a closing position interrupting a pressure medium conncetion between the first front wheel brake (VA1) and the pedal master cylinder ($F_{Hz}$), characterized in that there is provided for both valves (24, 25; 28, 29) a common valve closure member (21) having two sealing elements (24 respectively 24 and 25) and in that the second valve (28, 29) is preloaded in a closing direction by a biassing means (26).

2. Braking force control device as claimed in claim 1, characterized in that the valve closure member (21) is secured to a piston (22) which is in interaction with a control piston (41) acted upon by the pressure of the hand master cylinder ($H_{Hz}$).

3. Braking force control device as claimed in claim 1 or 2, characterized in that the second valve (28, 29) is a pressure reducing valve.

4. Braking force control device as claimed in claim 3, characterized in that the pressure reduction can be compensated upon attainment of a predetermined pressure level.

5. Braking force control device as claimed in claim 3 or 4, characterized in that the pressure reducing valve comprises a conical end (29) of the valve closure member (21) and a second stepped piston (48) with a central bore (54) whose latter end adjacent to the valve closure member (21) is designed as valve seat.

6. Braking force control device as claimed in claim 5, characterized in that the second stepped piston (48) has an axially parallel second bore (55) of smaller diameter and in that a flap valve (56) is arranged in the bore (55).

7. Braking force control device as claimed in claim 1 or 2, characterized in that a throttle (30) is provided which is connected in parallel to the second valve (28, 29).

8. Braking force control device as claimed in claim 7, characterized in that the valves (21, 25) and (28, 29) are arranged such that the second valve (28, 29) is opened in the closed position of the first valve (21, 25).

## Revendications

1. Dispositif de commande de force de freinage pour un système de freinage hydraulique de motocyclette, dans lequel un maître-cylindre à actionnement au pied ($F_{Hz}$) peut appliquer de la pression à un frein de roue arrière (HA) et à un premier frein de roue avant (VA1) et un maître-cylindre à actionnement manuel ($H_{Hz}$) peut appliquer de la pression à un deuxième frein de roue avant (VA2), dans lequel l'application de pression au frein de roue arrière (HA) peut être réduite en fonction de la pression fournie par le maître-cylindre à actionnement manuel ($H_{Hz}$) et dans lequel le dispositif de commande de force de freinage (1) comporte un piston étagé (12) déplaçable contre la force d'un ressort de rappel (36), piston dont la surface effective la plus grande délimite une chambre d'admission de pression (15) et est sollicitable par la pression du maître-cylindre à actionnement au pied ($F_{Hz}$) et dont la surface effective la plus petite délimite une chambre de sortie de pression (16) et est sollicitable par la pression dans le frein de roue arrière (HA), et une première soupape (24, 25), au moyen de laquelle une liaison pour le milieu de pression entre la chambre d'admission de pression (15) et la chambre de sortie de pression (16) peut être fermée, ainsi qu'une seconde soupape (28, 29) qui peut être chargée par la pression obtenue dans le maître-cylindre à actionnement manuel (H$_{Hz}$) vers une position de fermeture interrompant une liaison de milieu de pression entre le premier frein de roue avant (VA1) et le maître-cylindre à actionnement au pied (F$_{Hz}$), ledit dispositif étant caractérisé en ce qu'il est prévu pour les deux soupapes (24, 25; 28, 29) un organe obturateur commun (21) avec deux éléments d'étanchéité (24 ou 24* et 25) disposés en sens opposé et en ce que la seconde soupape (28, 29) est précontrainte dans la direction de fermeture par un dispositif de rappel (26).

2. Dispositif de commande de force de freinage selon la revendication 1, caractérisé en ce que l'organe obturateur (21) est fixé à un piston (22) qui est en interaction avec un piston de commande (41) sollicité par la pression du maître-cylindre à actionnement manuel (H$_{Hz}$).

3. Dispositif de commande de force de freinage selon l'une des revendications 1 ou 2, caractérisé en ce que la seconde soupape (28, 29) est une soupape réductrice de pression.

4. Dispositif de commande de force de freinage selon la revendication 3, caractérisé en ce que la réduction de pression peut être compensée lorsqu'on atteint un niveau de pression déterminé.

5. Dispositif de commande de force de freinage selon l'une des revendications 3 ou 4, caractérisé en ce que la soupape réductrice de pression comprend une extrémité conique (29) de l'organe obturateur (21) et un second piston étagé (48) avec un alésage central (54) dont l'extrémité voisine de l'organe obturateur (21) est réalisée comme siège de soupape.

6. Dispositif de commande de force de freinage selon la revendication 5, caractérisé en ce que le second piston étagé (48) présente un second alésage (55) parallèle à l'axe et de plus faible diamètre et en ce qu'un clapet (56) est disposé dans le second alésage (55).

7. Dispositif de commande de force de freinage selon l'une des revendications 1 ou 2, caractérisé en ce qu'il est prévu un étranglement (30) monté en parallèle avec la seconde soupape (28, 29).

8. Dispositif de commande de force de freinage selon la revendication 7, caractérisé en ce que les soupapes (21, 25 et 28, 29) sont arrangées de telle sorte que la seconde soupape (28, 29) est ouverte quand la première soupape (21, 25) est fermée.

Fig. 1

Fig. 2

0 025 101

# Fig. 3

$H_{Hz}$

VA 2

$F_{Hz}$

HA

VA 1

0 025 101

Fig. 4

Blockierbereich
Hinterrad

Blockierbereich
Vorderrad

z=1,0

z=0,8

z=0,6

z=0,4

z=0,2

$P_{HA}$

$P_{VA}$

0 025 101

15

Fig. 5

Blockierbereich
Hinterrad

Blockierbereich
Vorderrad

z=1,0

z=0,8

z=0,6

z=0,4

z=0,2

$P_{HA}$

$P_{VA}$

0 025 101